# DEMANDE DE BREVET EUROPEEN

(11) **EP 1 424 759 A2**
(43) Date de publication de la demande: **02.06.2004**
(21) Numéro de dépôt: 03300144.7
(22) Date de dépôt: 03.10.2003
(51) Int. Cl.: H02J 7/14, B60L 11/18

(54) **Système de charge de la battérie d'un véhicule à traction électrique ou à traction hybride**

(30) Priorité: 27.11.2002 FR 0214854
(71) Demandeur: Peugeot Citroen Automobiles SA, 78140 Vélizy Villacoublay (FR)
(72) Inventeur: Loubeyre, Yves, 92380 Garches (FR)
(74) Mandataire: Grynwald, Albert

(57) **Abrégé**

L'invention est relative à un dispositif pour l'alimentation d'un moteur électrique d'un véhicule à traction électrique ou hybride et pour la charge de la batterie d'accumulateurs alimentant le moteur.

Ce dispositif comporte des sectionneurs (40) ou interrupteurs dont chacun est installé en série avec un conducteur (46, 47) d'alimentation du moteur électrique de traction du véhicule et qui est destiné à coopérer avec un organe d'un appareil de recharge pour ouvrir le sectionneur afin, d'une part, de relier la batterie (26) à une source d'énergie de recharge et, d'autre part, d'isoler le moteur de cette source d'énergie.

## Description

L'invention est relative à un système de charge ou recharge de la batterie d'un véhicule à traction électrique ou à traction hybride.

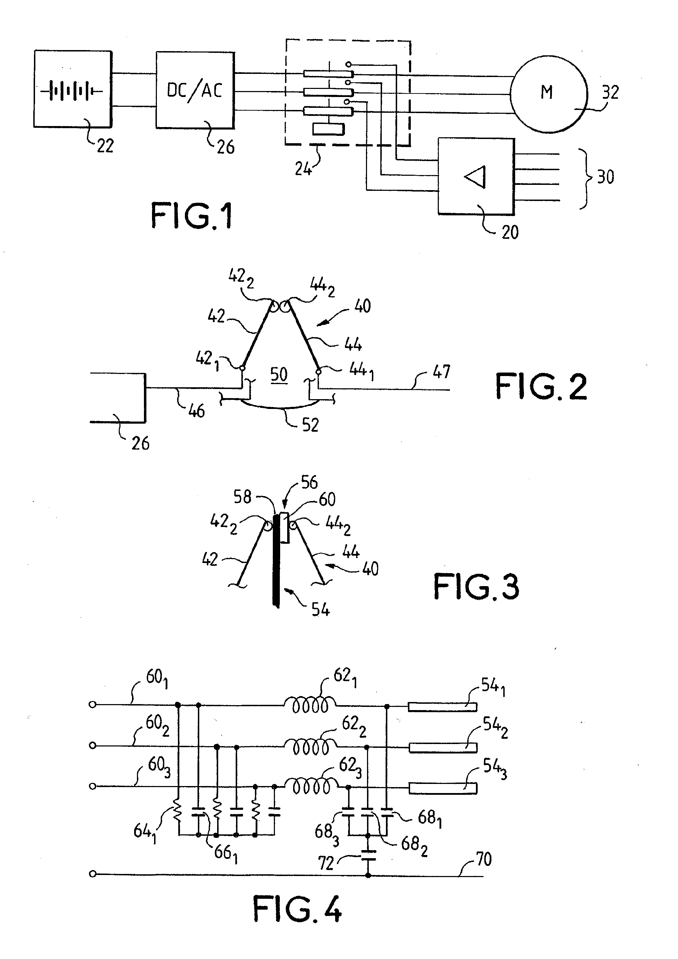

Les batteries des véhicules à traction électrique doivent être rechargées aisément et rapidement. A cet effet, les véhicules électriques comportent, comme représenté sur la figure 1, une prise de puissance destinée à être connectée à un réseau de distribution, en général du triphasé 380 volts. Cette prise de puissance est reliée à la batterie 22 par l'intermédiaire d'un commutateur 24 et d'un convertisseur de puissance ou onduleur 26 qui transforme le courant alternatif en un courant continu.

Entre le commutateur 24 et le réseau 30, on prévoit des moyens électroniques de recharge 20 pour fournir au convertisseur onduleur 26 les valeurs correctes de tension et d'intensité de courant électrique pour la charge de la batterie 22.

Lorsque le commutateur 24 est dans une première position, celle représentée sur la figure, la batterie 22 alimente le moteur électrique de traction 32, par l'intermédiaire du commutateur 24 et de l'onduleur 26 qui, dans ce cas, transforme le courant continu de la batterie en un courant alternatif.

Lorsque le commutateur 24 est dans sa seconde position, le moteur 32 a ses bornes d'alimentation déconnectées des sorties de l'onduleur 26, mais, par contre, les bornes de l'onduleur 26 sont reliées au réseau 30 par l'intermédiaire des moyens électroniques 20. Ainsi, la batterie 22 est chargée en courant continu par les sorties continues de l'onduleur 26.

En outre, lorsque le commutateur est dans la position représentée sur la figure 1, c'est-à-dire lorsqu'il est déconnecté du réseau 30, le moteur 32 fonctionne en générateur lors de certaines phases telles que le freinage du véhicule ou des phases de décélération.

Le commutateur 24 peut être du type biphasé (ou monophasé) ou triphasé, selon le type de moteur électrique 32. Par ailleurs, ce commutateur est soit de type mécanique, soit de type électronique.

L'invention part de la constatation que les moyens de charge de la batterie qui se trouvent à bord du véhicule sont lourds, complexes et onéreux.

Ainsi, l'invention prévoit de disposer au moins une partie des moyens électroniques de recharge dans une station de distribution d'énergie.

A cet effet, le véhicule électrique ou hybride selon l'invention est caractérisé en ce qu'il comporte un moyen sectionneur ou interrupteur qui est destiné, en l'absence de sollicitation par des moyens de recharge de la batterie, à assurer la liaison entre, d'une part, un onduleur ou convertisseur de puissance et, d'autre part, le moteur de traction du véhicule et qui, lorsqu'il est sollicité par les moyens de recharge de la batterie, permet d'établir, par coopération avec ces moyens, d'une part, une liaison de la batterie avec une source de charge externe et, d'autre part, une isolation du moteur électrique par rapport à la batterie et par rapport à la source externe.

Ainsi, il n'est plus nécessaire de prévoir à bord du véhicule ni le commutateur 24 ni l'électronique 20 de recharge (figure 1). En outre, l'onduleur peut être simplifié puisqu'il n'est pas nécessaire notamment de prévoir de filtrage par rapport au réseau, car ce filtrage peut être prévu dans la station de recharge. On notera aussi qu'il n'est plus nécessaire, comme pour certains onduleurs existant aujourd'hui, de lui adjoindre le commutateur puisque celui-ci peut se trouver dans la station de recharge.

Dans une réalisation, l'interrupteur ou sectionneur à bord du véhicule comporte des moyens de blocage qui maintiennent l'interrupteur fermé quand le véhicule est prêt à fonctionner, par exemple quand une tension de contact dite APC est active.

En variante, ou en complément, l'interrupteur est disposé dans un logement débouchant à l'extérieur du véhicule et fermé par une porte d'accès qui est bloquée également quand le véhicule est prêt à fonctionner par exemple par activation d'une tension de contact.

L'invention concerne, selon un second de ses aspects, des moyens de recharge de batterie de véhicule pour une station de recharge qui comportent un organe tel qu'un doigt destiné, d'une part, à relier des circuits de charge, de préférence de grande puissance (pour une charge rapide), à un onduleur ou convertisseur de puissance de charge de la batterie de véhicule et, d'autre part, à isoler du circuit de charge, le moteur électrique.

Ainsi, si en station les moyens de charge de la batterie sont de type rapide, c'est-à-dire d'une puissance suffisante, par exemple permettant une charge en 15 minutes environ, l'automobiliste consacrera à cette charge un temps équivalent à celui qu'il consacre à remplir, dans une « station-service », son réservoir en carburant dans le cas d'un moteur thermique.

Ainsi, l'invention est relative, de façon générale, à un dispositif pour l'alimentation d'un moteur électrique d'un véhicule à traction électrique ou hybride et pour la charge de la batterie d'accumulateurs alimentant le moteur électrique, qui est caractérisé en ce qu'il comporte des sectionneurs ou interrupteurs dont chacun est installé en série avec un conducteur d'alimentation du moteur électrique de traction du véhicule et qui est destiné à coopérer avec un organe d'un appareil de recharge pour ouvrir le sectionneur afin, d'une part, de relier la batterie à une source d'énergie de recharge et, d'autre part, d'isoler le moteur de cette source d'énergie.

Selon une réalisation, chaque sectionneur ou interrupteur comporte deux branches en contact l'une avec l'autre en l'absence de coopération avec l'organe de l'appareil de recharge et qui s'écartent l'une de l'autre lorsque l'organe de l'appareil de recharge est mis en place.

Le dispositif peut comporter des moyens pour empêcher l'ouverture de l'interrupteur ou sectionneur quand le véhicule est prêt à fonctionner ou en fonctionnement.

Les interrupteurs ou sectionneurs sont, par exemple, disposés dans un logement débouchant à l'extérieur du véhicule.

Dans ce cas, le logement peut être fermé par une porte et le dispositif comprend des moyens de blocage de cette porte quand le véhicule est prêt à fonctionner ou est en fonctionnement.

Dans un mode de réalisation, le dispositif comporte un convertisseur tel qu'un onduleur pour transformer le courant continu de la batterie en un courant alternatif d'alimentation du moteur de traction et pour transformer le courant alternatif de charge en un courant continu, ce convertisseur étant dépourvu de moyens de filtrage destinés à isoler le secteur d'alimentation des circuits du véhicule.

L'invention concerne aussi un appareil destiné à être connecté à un réseau d'alimentation en énergie électrique afin de charger une batterie de véhicule à traction électrique ou hybride qui est caractérisé en ce qu'il comporte des organes d'ouverture d'interrupteurs ou sectionneurs à bord des véhicules, chaque organe étant propre à connecter le réseau d'alimentation à la batterie et à isoler le réseau du moteur de traction de chaque véhicule.

Chaque organe comporte, par exemple, une extrémité comportant une partie conductrice et une partie isolante.

L'appareil comprend, par exemple, des moyens de filtrage pour isoler les circuits de chaque véhicule du réseau d'alimentation en énergie électrique.

L'appareil peut comporter des moyens pour adapter l'impédance de charge au réseau électrique.

D'autres caractéristiques et avantages de l'invention apparaîtront avec la description de certains de ses modes de réalisation, celle-ci étant effectuée en se référant aux dessins ci-annexés sur lesquels:
- la figure 1, déjà décrite, est un schéma montrant l'alimentation d'un moteur de traction de véhicule et des moyens de charge de la batterie de ce véhicule électrique,
- la figure 2 est un schéma d'un sectionneur pour un véhicule conforme à l'invention,
- la figure 3 est un schéma analogue à celui de la figure 2 montrant la coopération du sectionneur avec un organe de charge se trouvant en station, et
- la figure 4 est un schéma d'un circuit de charge rapide pour une station de charge.

Sur la figure 2, on a représenté un sectionneur 40 à bord du véhicule qui comporte deux bras, ou branches, conducteurs 42 et 44 articulés selon des axes parallèles, respectivement 42₁ et 44₁, de façon telle que ces bras soient rappelés l'un vers l'autre par ressorts (non montrés) afin que les extrémités de ces bras, respectivement 42₂ et 44₂, soient en contact l'un avec l'autre.

Le bras 42 est relié par un conducteur 46 à une borne de l'onduleur 26 tandis que le bras 44 est relié, par un conducteur 47, à une borne du moteur électrique (non représenté sur la figure 2).

Dans le cas d'un onduleur et d'un moteur triphasés (comme dans le cas de la figure 1), on prévoit trois sectionneurs du type 40, un sur chaque conducteur reliant l'onduleur au moteur.

Les sectionneurs 40 se trouvent dans un logement 50 à proximité de la carrosserie du véhicule. Ce logement 50 est fermé par une porte 52 dotée de moyens de verrouillage (non montrés) tels que, lorsque la clé de contact est en action, ou en position +APC, cette porte 52 reste fermée et ainsi, il n'est pas possible d'accéder au sectionneur 40. Dans ces conditions, la recharge de la batterie ne peut être effectuée que lorsque le contact n'est pas mis.

En variante (ou en complément), des moyens de blocage sont prévus pour empêcher l'écartement des bras 42 et 44, par exemple par un blocage des articulations 42₁ et 44₁, lorsque le contact est mis (présence de la tension + APC).

Chaque sectionneur 40 est destiné à coopérer avec un organe 54 (figure 3) relié à une source d'alimentation en énergie électrique dans une station. Cet organe 54 comporte une extrémité 56 qui, lorsqu'elle est introduite entre les branches 42 et 44, écarte les extrémités 42₂ et 44₂. Cette extrémité 56 comprend une partie conductrice 58 et une partie isolante 60. La partie conductrice 58 vient en contact avec l'extrémité 42₂ de la branche 42 et la partie isolante 60 entre en contact avec l'extrémité 44₂ de la branche 44. La partie conductrice 58 est en liaison électrique avec une alimentation triphasée dans la station. Dans ces conditions, quand l'organe 54 ouvre le sectionneur 40, l'énergie peut être apportée à l'onduleur 26 pour charger la batterie tandis que le moteur est isolé (du fait de la partie isolante 60) de cette alimentation en énergie électrique.

Ainsi, avec de simples sectionneurs 40, les éléments essentiels pour la recharge rapide de la batterie du véhicule peuvent se trouver uniquement dans une station au sol.

La figure 4 représente une station ou borne de charge rapide. Cet exemple concerne l'alimentation triphasée avec trois conducteurs d'alimentation, respectivement 60₁, 60₂ et 60₃, qui sont reliés aux organes 54₁, 54₂, 54₃ par l'intermédiaire de moyens de filtrage permettant d'isoler le réseau électrique des circuits du véhicule. Dans l'exemple représenté sur la figure 4, ces moyens de filtrage comportent d'une part, des inductances 62₁, 62₂, 62₃ en série avec chacun des conducteurs, des ensembles de résistances et condensateurs 64₁, 66₁, etc. en parallèle et enfin, des condensateurs 68₁, 68₂, 68₃ reliés à un conducteur de neutre 70 par l'intermédiaire d'un autre condensateur 72.

Ces ensembles d'inductances, résistances et condensateurs permettent également l'adaptation d'impédance entre l'onduleur et le réseau électrique.

Ces stations de charge rapide de batterie peuvent être installées dans les stations-service de distribution de carburant.

Le sectionneur 40 peut être installé dès la fabrication du véhicule, en première monte. En variante, le sectionneur est installé ultérieurement, en seconde monte. Dans les deux cas, l'électronique à bord du véhicule peut être simplifiée et allégée.

La simplification de l'électronique à bord du véhicule électrique ou hybride est obtenue au moyen d'un surcoût relativement peu important en station.

## Revendications

1. Dispositif pour l'alimentation d'un moteur électrique d'un véhicule à traction électrique ou hybride et pour la charge de la batterie d'accumulateurs alimentant le moteur, **caractérisé en ce qu'**il comporte des sectionneurs (40) ou interrupteurs dont chacun est installé en série avec un conducteur (46, 47) d'alimentation du moteur électrique de traction du véhicule et qui est destiné à coopérer avec un organe (54) d'un appareil de recharge pour ouvrir le sectionneur afin, d'une part, de relier la batterie (26) à une source d'énergie de recharge et, d'autre part, d'isoler le moteur de cette source d'énergie.

2. Dispositif selon la revendication 1, **caractérisé en ce que** chaque sectionneur ou interrupteur comporte deux branches (42, 44) en contact l'une avec l'autre en l'absence de coopération avec l'organe de l'appareil de recharge et qui s'écartent l'une de l'autre lorsque l'organe de l'appareil de recharge est mis en place.

3. Dispositif selon la revendication 1 ou 2, **caractérisé en ce qu'**il comporte des moyens pour empêcher l'ouverture de l'interrupteur ou sectionneur quand le véhicule est prêt à fonctionner ou en fonctionnement.

4. Dispositif selon l'une des revendications 1 à 3, **caractérisé en ce que** les interrupteurs ou sectionneurs sont disposés dans un logement (50) débouchant à l'extérieur du véhicule.

5. Dispositif selon la revendication 4, **caractérisé en ce que** le logement est fermé par une porte (52) et **en ce qu'**il comprend des moyens de blocage de cette porte quand le véhicule est prêt à fonctionner ou en fonctionnement.

6. Dispositif selon l'une des revendications 1 à 5, **caractérisé en ce qu'**il comporte un convertisseur tel qu'un onduleur pour transformer le courant continu de la batterie en un courant alternatif d'alimentation du moteur de traction et pour transformer le courant alternatif de charge en un courant continu, ce convertisseur étant dépourvu de moyens de filtrage destinés à isoler le secteur d'alimentation des circuits du véhicule.

7. Appareil destiné à être connecté à un réseau d'alimentation en énergie électrique afin de charger une batterie de véhicule à traction électrique ou hydride, **caractérisé en ce qu'**il comporte des organes (54) d'ouverture d'interrupteurs ou sectionneurs à bord des véhicules, chaque organe étant propre à connecter le réseau d'alimentation à la batterie et à isoler le réseau du moteur de traction de chaque véhicule.

8. Appareil selon la revendication 7, **caractérisé en ce que** chaque organe comporte une extrémité comportant une partie conductrice (58) et une partie isolante (60).

9. Appareil selon la revendication 7 ou 8,
**caractérisé en ce qu'**il comprend des moyens de filtrage (60, 62, 68, 72) pour isoler les circuits de chaque véhicule du réseau d'alimentation en énergie électrique.

10. Appareil selon l'une des revendications 7 à 9, **caractérisé en ce qu'**il comporte des moyens pour adapter l'impédance de charge au réseau électrique.
